# EUROPÄISCHE PATENTSCHRIFT

(11) **EP 0 947 395 B1**
(45) Veröffentlichungstag und Bekanntmachung des Hinweises auf die Patenterteilung: **28.04.2004**
(21) Anmeldenummer: 99106304.1
(22) Anmeldetag: 26.03.1999
(51) Int. Cl.: B60R 21/16, B60R 21/26

(54) **Seitenaufprall-Schutzvorrichtung**
Side impact protection device
Dispositif de protection contre un choc latéral

(30) Priorität: 30.03.1998 DE 19814054
(43) Veröffentlichungstag der Anmeldung: 06.10.1999
(73) Patentinhaber: ADAM OPEL AG, 65423 Rüsselsheim (DE)
(72) Erfinder: Habla, Gerhard Dipl.-Ing. (FH), 55595 Hargesheim (DE)
(74) Vertreter: Kümpfel, Heinz, Dipl.-Ing.

(56) Entgegenhaltungen:
- DE-A- 19 517 764
- DE-A- 19 538 657
- DE-A- 19 541 513

## Beschreibung

Die Erfindung betrifft eine SeitenaufprallSchutzvorrichtung für Kraftfahrzeuge gemäß dem Oberbegriff des Anspruchs 1.

Eine derartige Schutzvorrichtung ist aus DE 195 38 657 A bekannt.

Eine Seitenaufprall-Schutzvorrichtung der vorstehenden Art ist Gegenstand der DE 197 04 657. Diese bekannte Vorrichtung ist seitlich in der Rückenlehne eines Kraftfahrzeugsitzes angeordnet. Die Gaskissenanordnung hat ein Gaskissen zum Schutz des Brustbereiches eines Fahrzeuginsassens und ein darüber angeordnetes Gaskissen zum Schutz seines Kopfes. Die beiden Gaskissen sind durch einen Halsbereich der Gaskissen miteinander verbunden. Die Aufblasvorrichtung ist in dem Gaskissen für den Brustbereich angeordnet. Aus ihr strömt das die Gaskissen aufblasende Gas ausschließlich in das Gaskissen für den Brustbereich. Der Halsbereich der Gaskissen hat einen so engen Querschnitt, daß sich das Gaskissen für den Kopfbereich erst aufbläst, wenn das andere Gaskissen vollständig aufgeblasen ist.

Auch die DE 195 17 764 beschreibt schon eine Seitenaufprall-Schutzvorrichtung, bei der ein Gaskissen für den Kopfbereich über ein Luftführungsventil mit einem Gaskissen für den Brustbereich verbunden ist. Zum gemeinsamen Aufblasen ist genau wie bei der zuvor beschriebenen Seitenaufprall-Schutzvorrichtung ausschließlich das Gaskissen für den Brustbereich mit einer Aufblasvorrichtung verbunden. Da das Aufblasen des Gaskissens für den Kopfbereich mittelbar über das Gaskissen für den Brustbereich erfolgt, wird das Gaskissen für den Brustbereich stets eher aufgeblasen als das andere Gaskissen. Durch eine unterschiedliche Luftdurchlässigkeit beider Gaskissen soll bei der Seitenaufprall-Schutzvorrichtung nach dieser Schrift erreicht werden, daß die Gashaltezeit beider Gaskissen unterschiedlich ist, so daß sich das für den Brustbereich vorgesehene Gaskissen nach einem Aufblasen rascher entleert als das für den Kopfbereich vorgesehene Gaskissen.

Kraftfahrzeugkarosserien bieten im Fall eines Seitenaufpralls zwangsläufig weit weniger Schutz als bei einem Frontalaufprall oder Heckaufprall, weil an den Fahrzeugseiten kaum den Fahrgastinnenraum nicht verkleinernder Verformungsweg zur Verfügung steht. Deshalb werden bei einem Seitenaufprall eher Kräfte in die Insassen eingeleitet als'in den anderen Fällen. Diese Kräfte können obendrein wesentlich höher sein als bei einem Frontal- oder Heckaufprall. Deshalb kommt es relativ rasch zu einer Überbeanspruchung des Brustbereiches des jeweiligen Fahrzeuginsassens. Eine solche Gefahr ist besonders groß, wenn ein Fahrzeuginsasse zum Zeitpunkt des Seitenaufpralls keine exakt mittige Position auf seinem Sitz einnimmt, sondern zumindest mit seinem Oberkörper eine nach außen hin versetzte Lage hat, was vor allem bei Beifahrern häufiger vorkommt.

Der Erfindung liegt das Problem zugrunde, eine Seitenaufprall-Schutzvorrichtung der eingangs genannten Art so auszubilden, daß das Verletzungsrisiko für die Brust möglichst gering ist.

Dieses Problem wird erfindungsgemäß durch die Merkmale des Anspruchs 1 gelöst.

Durch diese Gestaltung legen sich die Gaskissen zunächst gegen den weit robusteren Becken- und Schulterbereich des Fahrzeuginsassens an. Dadurch kommt es bei einem nicht genau mittig und gerade sitzenden Fahrzeuginsassen zu einer exakten Positionierung, bevor das zum Schutz des Brustbereiches bestimmte Gaskissen sich gegen den Brustbereich legt. Dadurch wird das Verletzungsrisiko durch nicht korrektes Sitzen des Fahrzeuginsassens weitgehend ausgeschlossen. Da die Hauptkräfte bei einem Seitenaufprall über das Gaskissen für die Schulter und das Gaskissen für das Becken eingeleitet werden, kommt es zu einer wesentlichen Kraftentlastung im Brustbereich, so daß das Verletzungsrisiko für den Insassen geringer wird. Der erfindungsgemäße Gasverteiler erlaubt es, mit geringem Aufwand die Gasverteilung in den einzelnen Gaskissen zu variieren und dadurch das Energieabsorptionsverhalten unterschiedlichen Gegebenheiten optimal anzupassen.

Da die erfindungsgemäße Seitenaufprall-Schutzvorrichtung genau wie die zuvor beschriebenen, bekannten Seitenaufprall-Schutzvorrichtungen in der Seite der Rükkenlehne des jeweiligen Sitzes angeordnet werden kann, brauchen die Türen des Kraftfahrzeugs nicht umgestaltet zu werden, so daß kein Platz für dort vorgesehene Stauund Ablagefächer verlorengeht und auch bei den Fensterhebern aus Platzgründen keine Änderungen notwendig werden.

Besonders wirksam sind die Fahrzeuginsassen für den Fall eines Seitenaufpralls geschützt, wenn gemäß einer Weiterbildung der Erfindung der Gasverteiler zum Befüllen der drei Gaskissen in einem solchen Maße ausgebildet ist, daß das sich gegen das Becken anlegende Gaskissen etwa 50 %, das sich gegen die Brust anlegende Gaskissen etwa 20 % und das sich gegen die Schulter anlegende Gaskissen etwa 30 % der durch den Seitenaufprall eingeleiteten Kräfte überträgt.

Konstruktiv besonders einfach ist die Seitenaufprall-Schutzvorrichtung gestaltet, wenn gemäß einer anderen Weiterbildung der Erfindung der Gasverteiler rohrförmig ausgebildet und von dem Gaskissen für den Brustbereich umschlossen ist, wenn der Gasverteiler an seiner Stirnseite einen Auslaß für das sich gegen die Schulter anlegende Gaskissen und an seiner gegenüberliegenden Stirnseite einen Auslaß für das sich gegen das Becken anlegende Gaskissen hat und wenn der Gasverteiler in seiner Mantelfläche weitere Auslässe zum Aufblasen des Gaskissens für die Brust aufweist.

Die zeitliche Verzögerung des Aufblasens des Gaskissens für den Brustbereich kann man durch Veränderung des Querschnittes der Auslässe in der Mantelfläche des Gasverteilers besonders leicht unterschiedlichen Erfordernissen anpassen, wenn die weiteren Auslässe durch Ausprägungen in der Mantelfläche des Gasverteilers gebildet sind.

In den drei Gaskissen lassen sich beim Aufblasen auf einfache Weise unterschiedliche Enddrücke erreichen, wenn zumindest das gegen den Brustbereich anliegende Gaskissen zur Begrenzung des in ihm sich aufbauenden Gasdruckes wenigstens eine Gasausströmöffnung aufweist.

Die Erfindung läßt verschiedene Ausführungsformen zu. Zur weiteren Verdeutlichung ihres Grundprinzips ist eine davon in der Zeichnung dargestellt und wird nachfolgend beschrieben. Diese zeigt in
- Fig. 1:: eine schematische Ansicht von hinten auf den Bereich eines Vordersitzes eines Kraftfahrzeugs mit der erfindungsgemäßen Seitenaufprall-Schutzvorrichtung,
- Fig. 2:: einen Bereich einer Gaskissenkammer der Seitenaufprall-Schutzvorrichtung,
- Fig. 3:: eine Ansicht eines Teilbereiches eines Gasverteilers der Vorrichtung nach Fig. 2.

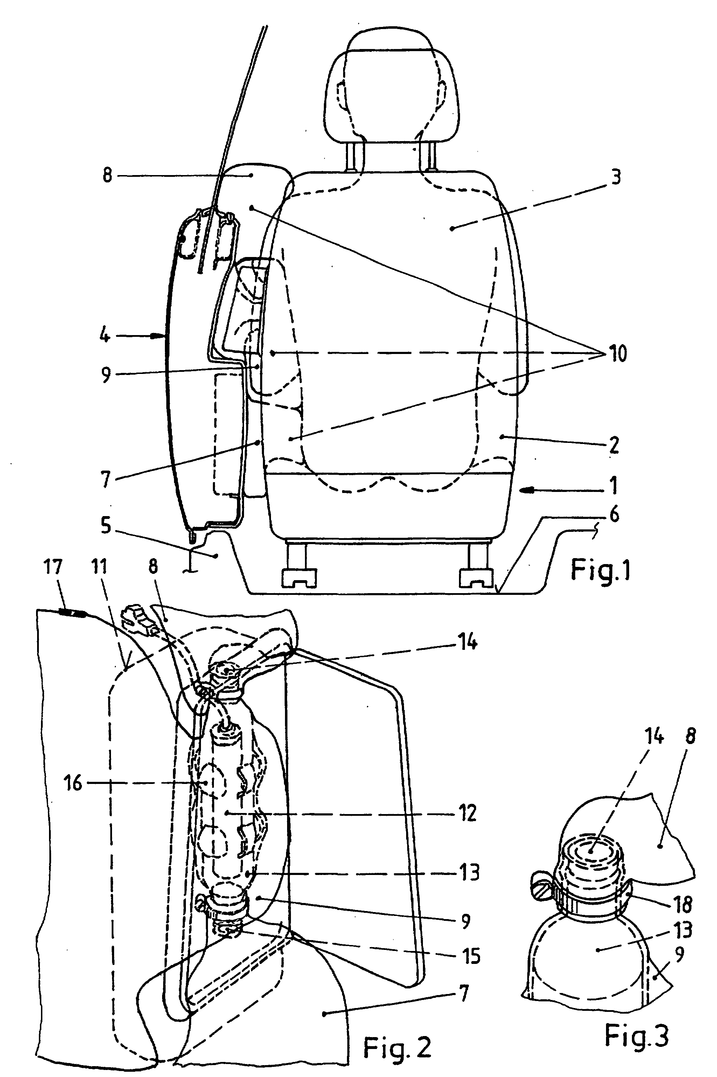

Die Figur 1 zeigt von hinten einen Vordersitz 1, welcher eine Rückenlehne 2 hat. Auf diesem Vordersitz 1 hat ein Fahrzeuginsasse 3 Platz genommen. Links neben diesem Fahrzeuginsassen 3 erkennt man eine Fahrzeugtür 4 und darunter einen Türschweller 5 sowie unterhalb des Vordersitzes 1 ein Bodenblech 6. Zwischen der Fahrzeugtür 4 und dem Becken des Fahrzeuginsassen 3 ist ein erstes Gaskissen 7 aufgeblasen. Ein zweites Gaskissen 8 stützt sich an der Fahrzeugtür 4 und dem Schulterbereich des Fahrzeuginsassens 3 ab. Zwischen diesen beiden Gaskissen 7, 8 befindet sich ein drittes Gaskissen 9, welches gegen die Fahrzeugtür 4 und den seitlichen Brustbereich des Fahrzeuginsassens 3 anliegt. Die drei Gaskissen 7, 8, 9 bilden zusammen eine Gaskissenanordnung 10.

Die Gaskissen 7, 8, und 9 sind so bemessen und werden im Falle eines Seitenaufpralls so mit Gas beaufschlagt, daß das untere, gegen das Becken anliegende Gaskissen 7 etwa 50 % der eingeleiteten Kräfte, das Gaskissen 8 etwa 30 % der eingeleiteten Kräfte und das Gaskissen 9 die restlichen 20 % der eingeleiteten Kräfte überträgt.

Die Figur 2 zeigt eine Gaskissenkammer 11 im geöffneten Zustand, welche von der Seite her in die in Figur 1 gezeigte Rückenlehne 2 eingelassen ist. In dieser Gaskissenkammer 11 ist eine Aufblasvorrichtung 12 angeordnet, bei der es sich um einen üblichen pyrotechnischen, durch ein elektrisches Signal gezündeten Gasgenerator handeln kann. Diese Aufblasvorrichtung 12 ist in einem rohrförmigen Gasverteiler 13 angeordnet, welcher an seinen beiden gegenüberliegenden Stirnseiten jeweils einen Auslaß 14, 15 hat. Am oberen Auslaß 14 ist das Gaskissen 8, am unteren Auslaß 15 das Gaskissen 7 angeschlossen. In seiner Mantelfläche hat der Gasverteiler 13 mehrere weitere Auslässe 16, welche durch Ausprägungen in der Mantelfläche gebildet sind. Der Bereich mit diesen Auslässen 16 wird von dem Gaskissen 9 für den Brustbereich umschlossen. Die Querschnitte aller Auslässe 16 in der Mantelfläche sind so bemessen, daß sich das Gaskissen 9 für den Brustbereich stets später aufbläst als die beiden anderen Gaskissen 7, 8.

Das Gaskissen 9 kann, wie das in Figur 2 gezeigt ist, eine Gasaustrittsöffnung 17 aufweisen, so daß sich in ihm stets ein geringerer Gasdruck einstellt als in den beiden anderen Gaskissen 7, 8.

Die Detaildarstellung gemäß Figur 3 zeigt, wie das obere Gaskissen 8 mittels einer Schelle 18 auf dem Auslaß 14 des Gasverteilers 13 befestigt ist.

## Patentansprüche

1. Seitenaufprall-Schutzvorrichtung für Kraftfahrzeuge, welche eine von einer einzigen Aufblasvorrichtung aufblasbare Gaskissenanordnung hat, die mehrere zeitversetzt zueinander aufblasbare Gaskissen aufweist, von denen ein Gaskissen zum Schutz des Brustbereiches eines Fahrzeuginsassens und ein Gaskissen (8) für den schulterbereich ausgebildet ist, **dadurch gekennzeichnet, daß** die Gaskissenanordnung (10) zusätzlich zu dem Gaskissen (9) für den Brustbereich und zu dem Gaskissen (8) für den schulterbereich ein Gaskissen (7) für den Beckenbereich aufweist und daß die Aufblasvorrichtung (12) mit einem Gasverteiler (13) zum Aufblasen des Gaskissens (9) für den Brustbereich zeitlich nach den beiden anderen Gaskissen (7, 8) ausgebildet ist und daß das Gaskissen (9) für den Brustbereich zum Übertragen geringerer Kräfte als die beiden anderen Gaskissen (7, 8) ausgebildet ist.

2. Seitenaufprall-Schutzvorrichtung nach Anspruch 1, **dadurch gekennzeichnet, daß** der Gasverteiler (13) zum Befüllen der drei Gaskissen (7, 8, 9) in einem solchen Maße ausgebildet ist, daß das sich gegen das Becken anlegende Gaskissen (7) etwa 50 %, das sich gegen die Brust anlegende Gaskissen (9) etwa 20 % und das sich gegen die Schulter anlegende Gaskissen (8) etwa 30 % der durch den Seitenaufprall eingeleiteten Kräfte überträgt.

3. Seitenaufprall-Schutzvorrichtung nach den Ansprüchen 1 oder 2, **dadurch gekennzeichnet, daß** der Gasverteiler (13) rohrförmig ausgebildet und von dem Gaskissen (9) für den Brustbereich umschlossen ist, daß der Gasverteiler (13) an seiner oberen Stirnseite einen Auslaß (14) für das sich gegen die Schulter anlegende Gaskissen (8) und an seiner gegenüberliegenden, unteren Stirnseiten einen Auslaß (15) für das sich gegen das Becken anlegende Gaskissen (7) hat und daß der Gasverteiler (13) in seiner Mantelfläche weitere Auslässe (16) zum Aufblasen des Gaskissens (9) für die Brust aufweist.

4. Seitenaufprall-Schutzvorrichtung nach Anspruch 3, **dadurch gekennzeichnet, daß** die weiteren Auslässe (16) durch Ausprägungen in der Mantelfläche des Gasverteilers (13) gebildet sind.

5. Seitenaufprall-Schutzvorrichtung nach zumindest einem der vorangehenden Ansprüche, **dadurch gekennzeichnet, daß** zumindest das gegen den Brustbereich anliegende Gaskissen (9) zur Begrenzung des in ihm sich aufbauenden Gasdruckes wenigstens eine Gasausströmöffnung (17) aufweist.

## Claims

1. Side-on collision protection device for motor vehicles, having a gas cushion assembly which is inflatable by a single inflation device and which has several gas cushions inflatable with a time lag from each other, of which one gas cushion is designed for protection of the chest region of a vehicle passenger and one gas cushion (8) for the shoulder region, **characterised in that** the gas cushion assembly (10) has, in addition to the gas cushion (9) for the chest region and the gas cushion (8) for the shoulder region, a gas cushion (7) for the lap region, and **in that** the inflation device (12) is designed with a gas distributor (13) for inflating the gas cushion (9) for the chest region after the other two gas cushions (7, 8), and **in that** the gas cushion (9) for the chest region is designed for transmitting lower forces than the other two gas cushions (7, 8).

2. Side-on collision protection device according to claim 1, **characterised in that** the gas distributor (13) is designed to fill the three gas cushions (7, 8, 9) to such an extent that the gas cushion (7) applied to the lap transmits about 50% of the forces exerted by the side-on collision, the gas cushion (9) applied to the chest transmits about 20% and the gas cushion (8) applied to the shoulder transmits about 30%.

3. Side-on collision protection device according to claim 1 or 2, **characterised in that** the gas distributor (13) is tubular and surrounded by the gas cushion (9) for the chest region, **in that** the gas distributor (13) has an outlet (14) at its upper end for the gas cushion (8) applied to the shoulder and an outlet (15) at its opposite, lower end for the gas cushion (7) applied to the lap, and **in that** the gas distributor (13) has further outlets (16) in its peripheral surface for inflating the gas cushion (9) for the chest.

4. Side-on collision protection device according to claim 3, **characterised in that** the further outlets (16) are formed by outward shapings in the peripheral surface of the gas distributor (13).

5. Side-on collision protection device according to one or more of the preceding claims, **characterised in that** at least the gas cushion (9) applied to the chest region has at least one gas outflow opening (17) for limiting the gas pressure which builds up in it.

## Revendications

1. Dispositif de protection contre un choc latéral, pour des véhicules automobiles, comprenant un agencement de coussins à gaz, gonflables depuis un dispositif de gonflage unique, présentant une pluralité de coussins à gaz, gonflable de façon temporellement décalée les uns par rapport aux autres, coussins dont un coussin à gaz est réalisé pour la protection de la zone du thorax ou de la poitrine d'un occupant assis du véhicule, et un coussin à gaz (8) est réalisé pour la protection de la zone des épaules, **caractérisé en ce que** l'agencement (10) de coussins à gaz présente, en plus du coussin à gaz (9) prévu pour la zone du thorax, et en plus du coussin à gaz (8) pour la zone des épaules, un cousin à gaz (7) prévu pour la zone du bassin, et **en ce que** l'organe de gonflage (12) est réalisé avec un distributeur de gaz (13) pour le gonflage du coussin à gaz (9) prévu pour la zone du thorax, temporellement après le gonflage des deux autres coussins à gaz (7, 8), et **en ce que** le coussin à gaz (9), prévu pour la zone du thorax, est réalisé pour transmettre des forces plus faibles que les deux autres coussins à gaz (7, 8).

2. Dispositif de protection contre un choc latéral selon la revendication 1, **caractérisé en ce que** le distributeur de gaz (13) est réalisé pour remplir les trois coussins à gaz (7, 8, 9), à un degré tel que le coussin à gaz (7), appliqué contre le bassin, transmette environ 50 %, que le coussin à gaz (9), appliqué contre le thorax, transmette environ 20 % et que le coussin à gaz (8) appliqué contre les épaules transmette environ 30 % des forces induites par le choc latéral.

3. Dispositif de protection contre un choc latéral selon la revendication 1 ou 2, **caractérisé en ce que** le distributeur de gaz (13) est réalisé en forme tubulaire et est entouré par le coussin à gaz (9) prévu pour la zone du thorax, **en ce que** le distributeur de gaz (13) comporte, sur sa face frontale supérieure, une sortie (14) pour le coussin à gaz (8) appliqué contre les épaules et, sur ses faces frontales inférieures, opposées, une sortie (15) pour le coussin à gaz appliqué contre le bassin, et **en ce que** le distributeur de gaz (13) présente, sur sa surface d'enveloppe, d'autres sorties (16) pour le gonflage du coussin à gaz (9) prévu pour le thorax.

4. Dispositif de protection contre un choc latéral selon la revendications 3, **caractérisé en ce que** les autres sorties (16) sont formées par des déformations plastiques de la surface d'enveloppe du distributeur de gaz (13).

5. Dispositif de protection contre un choc latéral selon au moins l'une des revendications précédentes, **caractérisé en ce qu'**au moins le coussin à gaz (9), appliqué contre la zone de thorax, présente au moins une ouverture de sortie de gaz (17), pour limiter la pression de gaz s'établissant à l'intérieur.
